# EUROPÄISCHE PATENTSCHRIFT

(11) **EP 0 415 012 B1**
(45) Veröffentlichungstag und Bekanntmachung des Hinweises auf die Patenterteilung: **01.06.1994**
(21) Anmeldenummer: 90111056.9
(22) Anmeldetag: 12.06.1990
(51) Int. Cl.: F16L 21/00, F16L 47/06

(54) **Rohrverbindung**
Pipe connection
Raccord de tuyaux

(30) Priorität: 30.08.1989 DE 3928700
(43) Veröffentlichungstag der Anmeldung: 06.03.1991
(73) Patentinhaber: REHAU AG + Co, 95111 Rehau (DE)
(72) Erfinder:

(56) Entgegenhaltungen:
- DE-B- 2 102 163
- DE-C- 21 051
- DE-U- 8 001 815

## Beschreibung

Die Erfindung betrifft eine Rohrverbindung aus Kunststoff oder Metall, wobei das Steckende eines Rohres als Patrize in seinem Außendurchmesser unter Bildung eines konischen Übergangsbereiches auf die lichte Weite des als Matrize dienenden Folgerohres reduziert ist.

Aus der Deutschen Auslegeschrift 21 02 163 ist ein Verfahren zur Herstellung von Rohren aus Kunststoff bekannt, die an einem Spitzende eingezogen sind und mit diesem Einzug in die lichte Weite des nächstfolgenden Rohres eingesteckt werden. Die bekannten Rohre werden beispielsweise als Dachrinnen-Fallrohre verwendet. Das bekannte Verfahren erzeugt in einem ersten Verfahrensschritt das Rohr, welches in einem zweiten Verfahrensschritt in einem Kalibrator aufgeweitet und anschließend abgekühlt wird. Danach wird in einem dritten Verfahrensschritt das freie Ende eines abgeschnittenen Rohrstückes ungefähr auf die Aufweitungstemperatur erwärmt und in diesem Zustand über einen gekühlten Dorn gebracht, dessen Durchmesser etwa dem des Ziehdornes bei der Rohrherstellung entspricht. Durch die Abkühlung des Rohrendes schrumpft dieses auf den gekühlten Dorn auf und der Außendurchmesser der Einziehung erhält auf diese Weise annähernd den Umfang der lichten Weite des aufgeweiteten Rohres.

Der Schrumpfvorgang des Rohrendes bewirkt, daß sich ein konischer Übergangsbereich zwischen dem eingezogenen Steckende und dem aufgeweiteten Rohr ergibt.

Wenn die auf solche Weise hergestellten Dachrinnenfallrohre ineinandergesteckt werden, stößt dieser konische Übergangsbereich am freien Endrand des über den Steckbereich übergeschobenen Endes des Folgerohres an, wodurch die Rohre in ihrem Sitz gehalten werden. Dieser Vorgang läßt sich bei Dachrinnen-Fallrohren verwirklichen, da in den jeweiligen Anlagebereichen der aufeinanderfolgenden Rohrabschnitte lediglich das Gewicht der gesteckten Rohre als Einwirkungskraft aufgenommen werden muß.

Eine zusätzliche Belastung halten solche Rohrverbindungen nicht aus, denn bei zunehmender Krafteinwirkung neigt das als Matrize dienende Rohrende zum Ausbauchen bzw. zum Brechen, so daß die hergestellte Rohrverbindung zerstört würde.

Hier setzt die Erfindung ein, die es sich zur Aufgabe gestellt hat, eine gattungsgemäße Rohrverbindung anzugeben, welche bis zur Belastbarkeitsgrenze des Rohres auf Druck beansprucht werden kann. Erfindungsgemäß wird dazu vorgeschlagen, daß am konischen Übergangsbereich des als Patrize dienenden Rohrendes wenigstens eine senkrecht zur Rohrachse verlaufende Anschlagzone mit Anschlagflächen für die Stirnfläche des als Matrize dienenden Folgerohres vorgesehen ist.

Vorteilhaft entspricht die Anschlagzone in ihrer Höhe dem Rohrdurchmesser. Auf diese Weise kann die Druckfestigkeit der Verbindung noch erhöht werden.

Die Anschlagzone kann aus Anschlagnocken bestehen, welche gleichmäßig über den Umfang am Übergangsbereich verteilt sind. Die einzelnen Anschlagnocken können durch Teilzonen des konischen Übergangsbereiches voneinander getrennt sein. Anstelle der Anschlagnocken kann die Anschlagzone auch als ringförmige, über den Umfang verlaufende Wandauspressung am konischen Übergangsbereich ausgeformt sein. Diese Wandauspressung kann durch axiale Stützstege, welche über den Übergangsbereich verlaufen, zusätzlich abgestützt sein. Schließlich besteht noch die Möglichkeit, daß die Anschlagzone durch einen gegenkonisch zum konischen Übergangsbereich verlaufenden Stützring gebildet ist, welcher druckfest auf dem konischen Übergangsbereich angeordnet ist.

Die erfindungsgemäße Rohrverbindung stellt sich als innenliegende Steckmuffenverbindung dar, die insbesondere an Rohrsträngen Verwendung findet, die grabenlos verlegt werden. Hierbei ist es erforderlich, daß die Rohre eine glatte Außenoberfläche aufweisen, mit der sie in einen Erdkanal eingedrückt oder eingezogen werden können. Derartige Erdkanäle werden vor der Einbringung der Rohrleitung mit Erdbohrern, Bodenraketen oder im Spülverfahren erzeugt.

Wird ein Einziehverfahren verwendet, so muß der aus mehreren Einzelrohren zusammengesetzte Rohrstrang axial mit einem Seil oder einer Kette vorgespannt werden, damit sich die Einzelrohre beim Einziehen in den Rohrkanal nicht durch die Reibung zwischen der Rohroberfläche und dem Boden auseinanderziehen können. Die Kraft der erforderlichen axialen Vorspannung hängt vom Rohrdurchmesser, der maximalen Rohrstranglänge und letztlich auch von der Verfahrenstechnik ab, mit der der Erdkanal erzeugt worden ist. Hierbei ergibt sich die maximal dem Rohrstrang zumutbare Axialdruckbelastung im wesentlichen aus der Knickbelastbarkeit der einzelnen Rohre des Rohrstranges bzw. aus deren Ausbeulsicherheit, die wiederum im wesentlichen vom Durchmesser und von der Wanddicke des Einzelrohres abhängig sind.

Praxisuntersuchungen haben hier ergeben, daß z.B. bei einem Rohr mit 110 mm Außendurchmesser und einer Wanddicke von 3,2 mm die Rohrverbindung mit ca. 2 to maximal vorgespannt werden muß.

Bei der Betrachtung eines Standard-Kabelschutzrohres aus PVC mit der Abmessung 110 x 3,2 mm kann man als maximal zulässige Kurzzeitdruckspanung für das Material 90 N/mm² angeben. Dieses Rohr hat beim Außendurchmesser von 110 mm und der Wanddicke von 3,2 mm eine Querschnittsfläche von 1.073 mm². Daraus errechnet sich eine maximale Druckbelastbarkeit in axialer Richtung von 96.580 N oder 9,6 to. Damit liegt die maximal zulässige Druckbelastbarkeit also beim 4,8-fachen Wert der zu erwartenden axialen Vorspannkraft.

Dadurch wird es möglich, die axialdruckbelasteten Flächen ohne weiteres um die Hälfte zu reduzieren, ohne daß eine Überlastung des Materials an der druckbelasteten Stelle auftreten würde.

So kann durch die erfindungsgemäße Ausgestaltung der Rohrverbindung die Anlagefläche durch die Nockenausbildung des Steckendenbereiches auf ca. 50% reduziert werden. Druckversuche mit einer derartigen Rohrverbindung haben ergeben, daß auch bei der Reduzierung der Druckanlagenflächen um 50% bei auftretenden Überdrücken nicht die Verbindung versagt, d.h. daß sich die beiden Rohre nicht übereinanderschieben, sondern daß der Rohrstrang entweder ausknickt oder das Rohr axial beult. Dadurch ergibt sich, daß die durch die axiale Druckbelastung entstehende Flächenbelastung in der Muffe auch durch die erfindungsgemäß vorgeschlagene nockenartige Ausbildung der Anpressflächen unproblematisch ist.

Wesentlich für die Wirkungsweise der erfindungsgemäßen Rohrverbindung ist der Umstand, daß die zusammengesteckten Rohrlängen mit ihren Achsen zentrisch fixiert sein müssen, damit die druckübertragenden Rohrstirnflächen optimal anliegen und an der Außenseite des Rohres kein störender Stoß entsteht, der das Einschieben des Rohrstranges in den Erdkanal behindern könnte. Diese Zentrierung der druckbeanspruchten Rohrenden übernimmt das eingeschnürte Rohrende, dessen Außendurchmesser mit dem Innendurchmesser des folgenden Rohres korrespondiert. Durch das eingeschnürte Rohrende, das als innenliegende Muffe dient, entsteht eine Querschnittsverengung, die einen kontinuierlichen Übergang von der Einengung zum normalen Rohrinnendurchmesser erfordert, damit nachträglich Rohrleitungen oder Kabel problemlos in das verlegte Rohrsystem eingezogen werden können. Dieser kontinuierliche Übergang wird am eingezogenen Steckende durch eine Anfasung erzeugt, während an der Anschlagzone dieser kontinuierliche Übergang durch das Anformverfahren der Einschnürung hergestellt wird. Hierbei ist darauf zu achten, daß die Breite der ausgeformten Anschlagzone nicht zu groß werden darf, da durch das Ausformen der Anschlagzonen der kontinuierliche Übergang an der Einschnürung des Rohres teilweise verloren geht. Dies ist insbesondere dann zu beachten, wenn die Anschlagzone aus einzelnen Anschlagnocken besteht.

Es stehen sich also hier zwei Forderungen in der technischen Realisierbarkeit gegenüber: einerseits soll die Nockenbreite möglichst groß sein, um die Auflagefläche des anstoßenden Rohrendes möglichst groß zu machen, andererseits darf die Nockenbreite ein bestimmtes Maß nicht überschreiten, um den kontinuierlichen Übergang an der Innenseite des Rohres nicht zu ungünstig zu beeinflussen.

Hier hat sich durch Versuche herausgestellt, daß die Nockenbreite etwa fünfmal der Nennwanddicke des Rohres entsprechen sollte und der Abstand zwischen den einzelnen Nocken praktisch der Nockenbreite angenähert sein sollte.

In der Zeichnung sind Ausführungsbeispiele der erfindungsgemäßen Rohrverbindung schematisch dargestellt; es zeigt:
Fig.1 einen Teilschnitt durch das als Patrize dienende Rohrende mit über den konischen Übergangsbereich verlaufenden Nocken.
Fig.2 einen Teilschnitt gemäß Fig.1 mit im konischen Übergangsbereich ausgeformten Nocken.
Fig.3 einen Teilschnitt gemäß Fig.1 mit umlaufend ausgeformtem Druckring vor dem konischen Übergangsbereich.
Fig.4 einen Teilschnitt gemäß Fig.3 mit axialen Abstützstegen des Druckrings.
Fig.5 einen Teilschnitt durch das als Patrize dienende Rohrende mit auf dem konischen Übergangsbereich festgelegten Druckring.

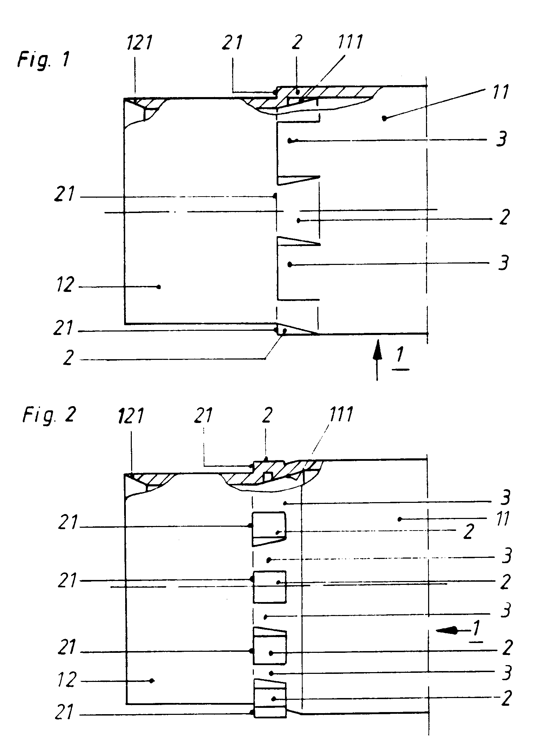

In Fig.1 ist das als Patrize dienende Rohrende 1 mit dem Ende des Rohrstückes 11 und dem Einzug 12 dargestellt. Am freien Ende des Einzuges 12 ist der konische Übergangsbereich 121 gezeigt, während im Bereich des Übergangs vom Einzug 12 zum Rohrstück 11 der konische Übergangsbereich 111 angeformt ist.

Die Anschlagzone besteht in der gezeigten Darstellung aus den Anschlagnocken 2, welche über den gesamten Bereich des konischen Übergangs 111 verlaufen. Die Nocken 2 sind durch mechanische Kraft aus dem konischen Übergangsbereich herausgedrückt, wobei der Bereich der größten Ausdrückung am Beginn des eingeschnürten Steckendes 12 liegt. Dieser Bereich der größten Ausdrückung ist gleichzeitig die Anschlagfläche 21 für das in der Zeichnung nicht dargestellte Stirnende des Folgerohres.

Die gezeigte Ausführung der Nocken 2 ergibt die günstigste Lastübertragung der an den Nocken 2 anliegenden, in der Zeichnung nicht dargestellten Querschnittsfläche des Folgerohres. Von der druckbeaufschlagten Fläche 21 der Nocken 2 ergibt sich dabei ein direkter, gerader, der vollen Wanddicke entsprechender Übergang zum Folgerohr. Es treten bei dieser Ausführungsform also keine schädlichen Knick-, Beul- oder Biegekräfte auf.

Bei der in Fig.2 dargestellten Ausführungsart haben gleiche Merkmale gleiche Bezeichnungen erhalten. Im Gegensatz zur Darstellung in Fig.1 verlaufen die Nocken 2 hier nicht über den gesamten Bereich des konischen Übergangs, sondern sind in diesem Bereich angeordnet. Die Ausformung der Nocken 2 ist in der hier gezeigten Darstellung günstiger, jedoch stellt sich die Lasteintragung von der Druckfläche 21 über die Nocke 2 zum anschließenden Rohr 11 ungünstiger dar, da die Kräfte über die Nockenform in den konischen Übergangsbereich umgeleitet werden müssen. Es gibt jedoch Anwendungsbereiche für die erfindungsgemäße Rohrverbindung, bei denen die Druckbelastbarkeit nicht in vorderster Reihe steht und im wesentlichen eine Zentrierung der beiden verbundenen Rohre gegeneinander gefordert wird.

Unter solchen Bedingungen sind die Nockenanordnungen gemäß Fig.2 ausreichend.

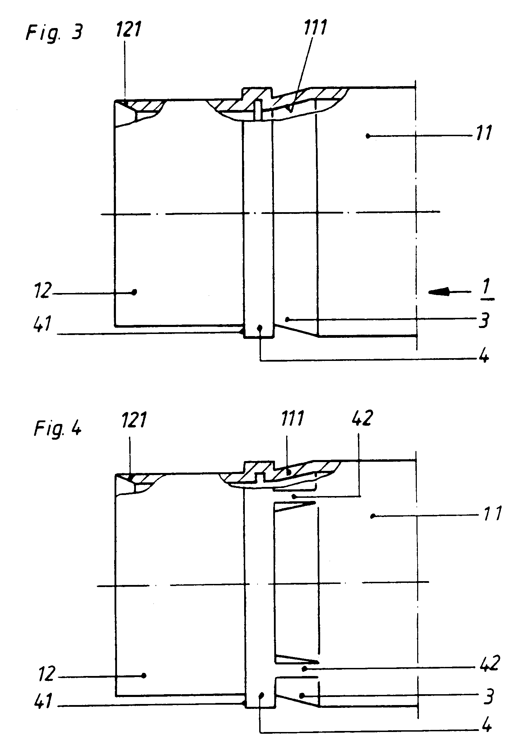

Das zur Nockenform gemäß Fig.2 Gesagte gilt auch für die Ausbildung gemäß Fig.3. Die Anschlagzone mit Anschlagfläche ist in dieser Ausführungsform nicht in den konischen Übergangsbereich 3 gelegt, sondern ist in Form eines umlaufenden Druckrings 4 vor dem konischen Übergangsbereich 3 gelegt. Die Anschlagfläche ist hier mit dem Bezugszeichen 41 versehen.

Gemäß der Ausführungsform zu Fig.4 ist die Anschlagzone 4 der Fig.3 mit zusätzlichen Stützstegen 42, die über den konischen Übergangsbereich 3 verlaufen, gegen das Rohr 11 abgestützt.

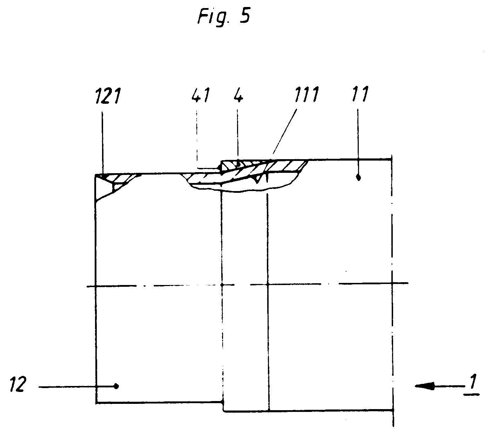

In Fig. 5 ist auf die Ausformung von Nocken oder Anschlagzonen aus oder vor dem konischen Übergangsbereich 3 verzichtet. Hier ist die Anschlagzone 4 durch einen gegenkonisch zum konischen Übergangsbereich 3 verlaufenden Stützring gebildet. Dieser Stutzring ist außen auf dem konischen Übergangsbereich befestigt, z.B. durch Kleben, Schweißen usw.

Die erfindungsgemäße Rohrverbindung kann als innenliegende Steckmuffe bei Rohren aus thermoplastischen Materialien in der Extrusionsstrecke hergestellt werden. Neben der Extrusion kann für die Herstellung solcher Rohre auch das Schleudergußverfahren verwendet werden.

Dieses Verfahren ist insbesondere bei der Herstellung von kurzen Rohrstücken beispielsweise für das Relining-Verfahren interessant.

Bei den durch Extrusion hergestellten Rohren kann die Einschnürung durch entsprechende Muffwerkzeuge in oder außerhalb der Strecke erfolgen. Bei dem Muffvorgang können dann die Nocken für die Anschlagflächen erzeugt werden. Eine weitere Möglichkeit zur Herstellung der erfindungsgemäßen Rohrverbindung ist durch das Blasverfahren gegeben.

Hierbei wird in das eingeschnürte Rohrende nachträglich beispielsweise eine umlaufende Sicke gemäß Fig. 3 und Fig.4 eingeblasen. Diese Ausführungsformen können auch im Schleudergußverfahren hergestellt werden.

## Patentansprüche

1. Rohrverbindung aus Kunststoff oder Metall, wobei das Steckende eines Rohres als Patrize in seinem Außendurchmesser unter Bildung eines konischen Übergangsbereiches auf die lichte Weite des als Matrize dienenden Folgerohres reduziert ist, dadurch gekennzeichnet, daß am konischen Übergangsbereich (3) des als Patrize dienenden Rohrendes (1) wenigstens eine senkrecht zur Rohrachse verlaufende Anschlagzone (2, 4) mit Anschlagflächen (21, 41) für die Stirnfläche des als Matrize dienenden Folgerohres vorgesehen ist.

2. Rohrverbindung nach Anspruch 1, dadurch gekennzeichnet, daß die Anschlagzone aus Anschlagnocken (2) besteht, welche gleichmäßig über den Umfang am Übergangsbereich (3) verteilt sind.

3. Rohrverbindung nach Anspruch 1, dadurch gekennzeichnet, daß die Anschlagzone als ringförmiger, über den Umfang verlaufender Anschlagring (4) am konischen Übergangsbereich (3) ausgeformt ist.

4. Rohrverbindung nach Anspruch 3, dadurch gekennzeichnet, daß der Anschlagring (4) durch axiale Stützstege (42) welche über den Übergangsbereich (3) verlaufen, zusätzlich abgestützt ist.

5. Rohrverbindung nach Anspruch 1, dadurch gekennzeichnet, daß die Anschlagzone durch einen gegenkonisch zum konischen Übergangsbereich (3) verlaufenden Stützring gebildet ist, welcher druckfest auf dem konischen Übergangsbereich angeordnet ist.

## Claims

1. Pipe connection made of plastic or metal whereby the push fit end of one pipe, serving as the male section, is reduced in its outer diameter, thus forming a tapered transitional section, to the clear width of the follow-on pipe, serving as the female section, characterised by the fact that in the course of reducing the circumference, the tapered transitional section (3) from the reduced circumference (12) to the pipe circumference (11) features at least one stop zone with stop face (21, 41) for the end face of the follow-on pipe.

2. Pipe connection as described in claim 1, characterised by the fact that the stop zone comprises stop cams (2) distributed evenly around the circumference of the transitional section (3).

3. Pipe connection as described in claim 1, characterised by the fact that the stop zone is fashioned in the form of an annular-shaped stop ring (4) extending throughout the circumference on the tapered transitional section (3).

4. Pipe connection as described in claim 1, characterised by the fact that the stop ring (4) is additionally supported by axial support webs (42) running throughout the transitional section (3).

5. Pipe connection as described in claim 1, characterised by the fact that the stop zone is formed by a support ring tapered in the opposite direction to the tapered transitional section (3) and which is seated in a manner resistant to pressure on the tapered transitional section.

## Revendications

1. Raccord de tubulure en matière plastique ou en métal, sachant que l'extrémité enfichée d'un tube est réduite sous forme de poinçon dans son diamètre extérieur en formant une zone de transition conique sur la largeur libre du tube suivant servant de matrice, caractérisé par le fait que sur la zone de transition conique (3) de l'extrémité du tube (1) servant de poinçon, on a prévu pour la face du tube suivant servant de matrice au moins une zone d'arrêt est constituée par des cames d'arrêt (21,41), verticale par rapport à l'axe du tube.

2. Raccord de tubulure selon la revendication 1, caractérisé par le fait que la zone d'arrêt est constitee par des cames d'arrêt (2) qui sont réparties régulièrement sur la périphérie de la zone de transition (3).

3. Raccord de tubulure selon la revendication 1, caractérisé par le fait que la zone d'arrêt est réalisée sous la forme d'une bague de butée annulaire (4) sur toute la périphérie, sur la zone de transition conique (3).

4. Raccord de tubulure selon la revendication 3, caractérisé par le fait que la bague de butée (4) est supportée en complément par des entretoises-supports axiales (42) qui se trouvent sur la zone de transition (3).

5. Raccord de tubulure selon la revendication 1, caracterisé par le fait que la zone de butée est constituée par une bague d'appui posée en direction contre conique par rapport à la zone de transition conique (3), laquelle, résistant bien à la pression, est installée sur la zone de transition conique.
